**Europäisches Patentamt**

**European Patent Office**

**Office européen des brevets**

(19)

(11) Veröffentlichungsnummer: **0 056 643**

**A1**

(12)

# EUROPÄISCHE PATENTANMELDUNG

(21) Anmeldenummer: **82100313.4**

(22) Anmeldetag: **18.01.82**

(51) Int. Cl.³: **B 41 F 33/00**
**B 41 F 13/20, G 01 L 1/08**

(30) Priorität: **21.01.81 DE 3101742**

(43) Veröffentlichungstag der Anmeldung:
**28.07.82 Patentblatt 82/30**

(84) Benannte Vertragsstaaten:
**AT BE CH DE FR GB IT LI NL SE**

(71) Anmelder: **Forschungsgesellschaft Druckmaschinen e.V.**
**Lyonerstrasse 18**
**D-6000 Frankfurt(DE)**

(72) Erfinder: **Spiegel, Nikolaus**
**Zeilharderstrasse 14a**
**D-6107 Reinheim 4(DE)**

(72) Erfinder: **Scheuter, Karl R., Prof.**
**Schillerstrasse 9**
**D-6100 Darmstadt(DE)**

(74) Vertreter: **Marek, Joachim**
**c/o M.A.N.-ROLAND Borsigstrasse 19**
**D-6052 Mühlheim/Main(DE)**

(54) **Verfahren und Vorrichtung zur Messung der Schmitzringvorspannung an Druckmaschinen.**

(57) Die Druckwerkszylinder (4, 5) von Druckmaschinen weisen Laufringe d.h. sogennante Schmitzringe (4a, 5a) auf, die bei Betrieb der Maschine unter Druck aufeinander ablaufen. Die Einstellung der Anpreßkraft zwischen den Laufringen ist für die drucktechnische Funktion und für die Lebensdauer wesentlich. Es wird deshalb ein Verfahren und eine Vorrichtung angegeben, um die Anpreßkraft zu ermitteln. Die Vorrichtung besteht aus einer zweiteiligen Kammer (8), die in den Zylinderspalt (3) verbracht und unter Druck gesetzt wird.

Fig.1

EP 0 056 643 A1

Croydon Printing Company Ltd.

Die Erfindung bezieht sich auf ein Verfahren bzw. auf eine
Vorrichtung zur Messung der Vorspannung zwischen zwei miteinander in Arbeitskontakt stehenden Schmitzringen an Rotationsdruckmaschinenzylindern.

Derartige Verfahren bzw. Vorrichtungen sind aus der DE-PS
2 300 946 und der DE-OS 2 528 027 bekannt. Diese Verfahren
sind aber teils ungenau und werden durch Unrundheiten und
verschiedene Oberflächenrauhigkeiten der Schmitzringe verfälscht oder liefern keine reproduzierbaren Werte.

Grundsätzlich beruhen die bisher bekannten Verfahren zur
Einstellung der Schmitzringvorspannung im Prinzip alle auf
einer Wegmessung. Gemessen wird dabei entweder die Schmitzringeinfederung, die Berührzonenbreite der Schmitzringe oder
die Zusammendrückung eines zwischen die Zylinder gelegten
Papierstapels. Alle diese Verfahren sind Behelfsmittel,
welche anstelle der maßgeblichen Kraft einen davon nicht
eindeutig abhängigen Weg messen. Praktische Erfahrungen
zeigen, daß dadurch Schwierigkeiten entstehen können.

Der Erfindung liegt die Aufgabe zugrunde, ein Verfahren und
eine Vorrichtung zur Durchführung des Verfahrens zu finden,
wodurch die direkte Messung der Schmitzringvorspannung ermöglicht ist.

Diese Aufgabe wird durch die kennzeichnenden Merkmale der
Ansprüche 1 bzw. 2 gelöst.

Das erfindungsgemäße Verfahren besteht also aus folgenden
Schritten:

1.) Die Druckwerkszylinder werden in Position "Druck ab"
gestellt;
2.) in den Spalt zwischen den Druckwerkszylindern werden nebeneinander die Teile einer mindestens zweigeteilten Druckkammer eingeschoben;
3.) die Teile werden im Spalt zusammengefügt;
4.) die Druckwerkszylinder werden in Position "Druck an"
gestellt;
5.) der Druckkammer wird ein Druckmedium zugeführt,
6.) der beim Abheben Lichtspalt) der Schmitzringe vorhandene Druck wird gemessen und der Ermittlung der
Schmitzringvorspannung zugrunde gelegt.

Das Auseinanderdrücken der Zylinder auf Lichtspalt zwischen
den Schmitzringen mit einer hydraulisch erzeugten Kraft ist
eine effektive Alternative zur Wegmessung. Hier wird in der
Tat direkt eine Kraft gemessen, die eindeutig mit der Vorspannkraft über die Systemsteifigkeit korreliert. Die enge
Bauweise der heutigen Druckmaschinen verhindert jedoch in
der Regel diese Möglichkeit. Würde die Kraft, was in einigen Fällen möglich wäre, zwischen den Zylinderzapfen angesetzt, so wird deren Steifigkeit verändert werden, so daß
ein merklicher Meßfehler in Kauf genommen würde. Dieser Meßfehler entfällt, wenn der Kraftangriff an den Zylinderballen
in unmittelbarer Nähe der Schmitzringe erfolgt. Dadurch ist, wie durchgeführte Untersuchungen zeigten, eine hochgenaue
und reproduzierbare Messung ermöglicht und zwar ohne durch
überhöhte Flächenpressungen die Zylinderoberflächen zu beschädigen.

Jeder Zylinder mit Schmitzringen hat im Bereich der Druckzone für Druckplatte und Gummituch einen Unterschnitt gegenüber dem Schmitzring. Er beträgt beim Plattenzylinder minimal 0,4 mm, beim Gummizylinder minimal 2,0 mm. Daraus ergibt sich bei angestellten Schmitzringen ein Spalt von minimal 2,4 mm. In diesen Spalt wird direkt neben den Schmitzring
der zur Messung gewählten Seite die Meßvorrichtung eingebracht. Da die Auflagefläche der Meßvorrichtung mit den Zylindern gut schmiegen muß, ist für jedes Druckformat, also für
verschiedene Zylinderdurchmesser, eine eigene Meßvorrichtung
notwendig.

Ein Ausführungsbeispiel der erfindungsgemäßen Vorrichtung
wird anhand nachfolgender schematischer Zeichnung näher erläutert. Es zeigt:

Fig. 1    eine in den Spalt zwischen zwei Druckwerks-
          zylindern eingebrachte erfindungsgemäße zwei-
          geteilte Vorrichtung geschnitten im Bereich
          der Druckmediumzufuhr;

Fig. 2    einen Ausschnitt aus dem unteren Teil der Vorrichtung gemäß Fig. 3 vergrößert;

Fig. 3    das untere Teil der Vorrichtung im Bereich
         einer Entlüftungsbohrung geschnitten;

Fig. 4    eine Draufsicht auf das untere Teil der Vorrichtung gemäß Fig. 3 und

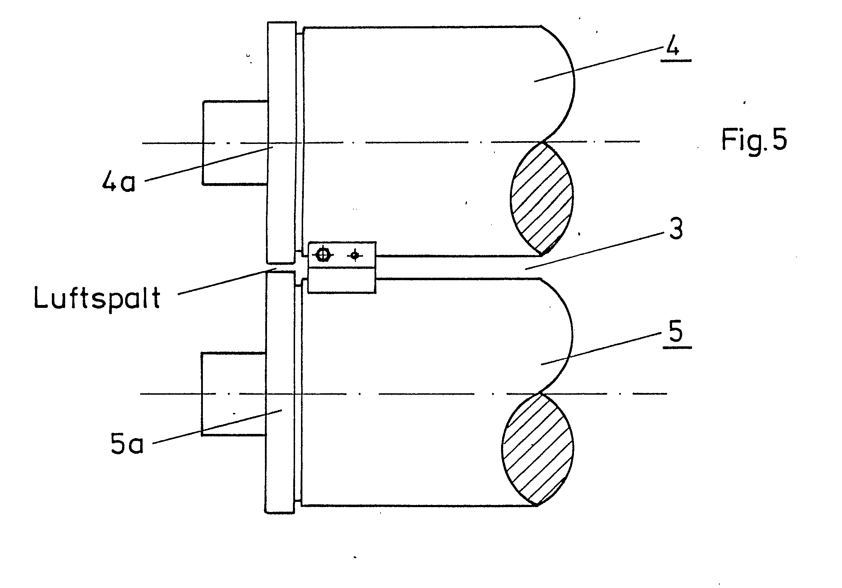

Fig. 5    eine Skizze über den Ort des Einbaus der Vorrichtung stark verkleinert.

Die erfindungsgemäße Vorrichtung 1a besteht aus einem Unterteil 1 und einem Oberteil 2. Diese sind nebeneinander in den
Spalt 3 zwischen den Druckwerkszylindern 4, 5 eingeschoben
und dann so zentriert zusammengefügt worden, daß die miteinander in Kontakt stehenden Innenflächen 6, 7 eine Druckkammer 8 bilden. Die Außenflächen 9, 10 der Teile 1, 2 weisen die Kontur des jeweiligen Druckwerkszylinders 4, 5 auf.

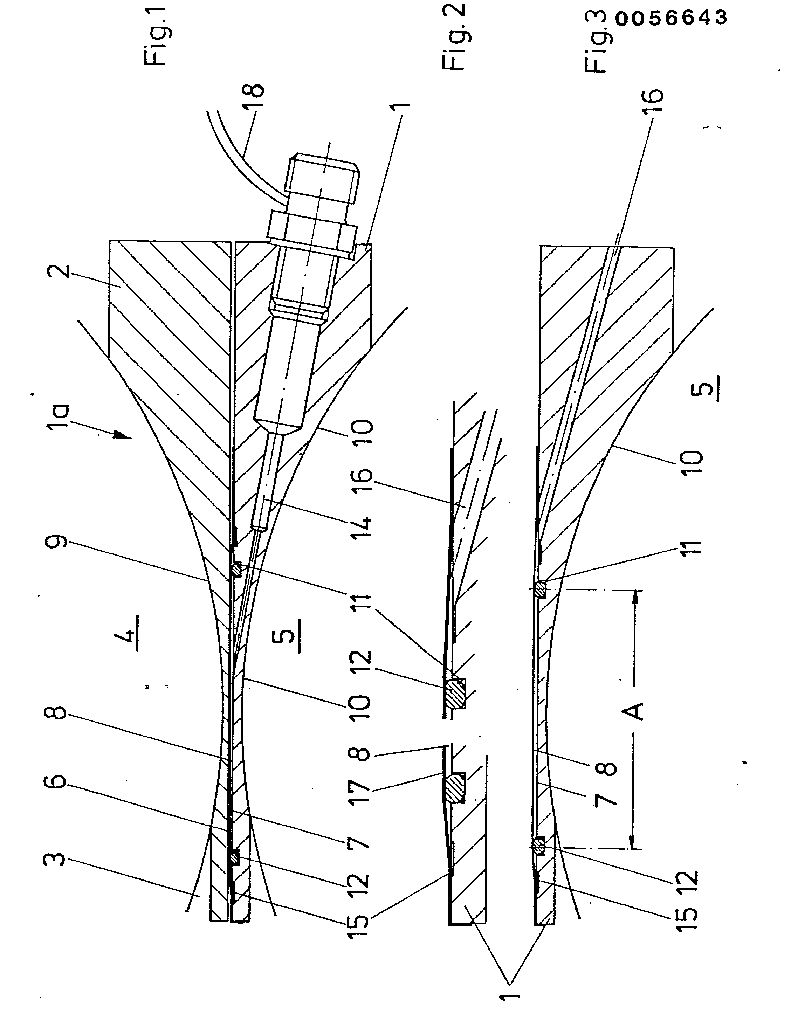

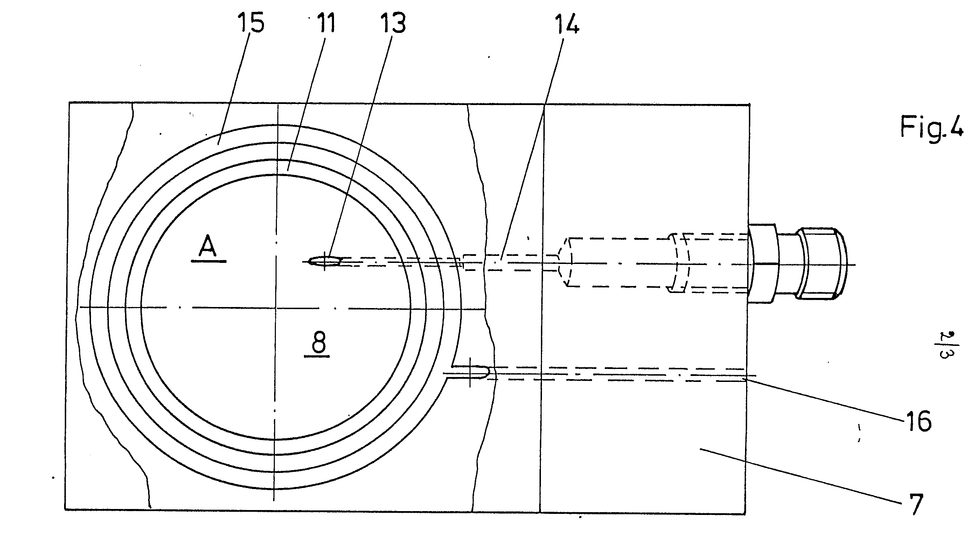

In der Innenfläche des Unterteils 1 (siehe Fig. 2 und 4)
ist eine geschlossene Nut 11 vorgesehen, in die ein Dichtring 12 eingelegt ist. In dem vom Dichtring 12 abgegrenzten
Bereich ist der Austritt 13 des Zulaufkanals 14 für das
Druckmedium vorgesehen. Außerhalb der durch den Dichtring 12
begrenzten Druckkammer 8 erstreckt sich konzentrisch zum
Dichtring 12 eine weitere Ausnehmung 15, in die eine Entlüftungsbohrung 16 mündet. Eine Membran 17 überdeckt Dichtring 12 und Ausnehmung 15 und ist dann am Unterteil 1 angeklebt. Die Druckkammer 8 bildet sich somit zwischen Unterteil 1 und der durch Oberteil 2 gestützten Membran 17. Über
den Zulaufkanal 14 fließt z.B. Öl in die Druckkammer 8. Der
Öldruck wirkt auf die Druckfläche A und erzeugt eine Kraft
F hydr. = p.A. Da A praktisch konstant ist, gilt F~p. Der
über einen Manometeranschluß 18 abgenommene Druck p ist also
ein eindeutiges Maß für die Kraft F hydr.. Ein Manometer kann
deshalb direkt in einer Krafteinheit kalibriert werden.

Die Messung bei einer speziellen Ausführung mit Dichtring
und Entlüftung läuft wie folgt ab: Die am jeweiligen Maschinentyp vorhandenen Einstellmechanismen zur Schmitzringvorspannung
werden so gestellt, daß eine richtige Vorspannung erwartet
werden darf. Nach der oben beschriebenen Montage der Vorrichtung 1a wird die vom Dichtring 12 umschlossene Druckkammer 8
bei abgestelltem Druck der Druckwerkszylinder 4, 5 durch den
Zulaufkanal 14 mit Öl gefüllt. Da die Membran 17 dabei weggedrückt wird, gelangt die Luft über die außerhalb des Dichtringes 14 liegende ringförmige Ausnehmung 15 in die ständig
offene Entlüftungsbohrung 16. Die Schmitzringe 4a, 5a werden
nun angestellt, wodruch die Druckkammer 8 nach außen abgedichtet wird. Jetzt wird mit einer Handpumpe der Öldruck solange erhöht, bis zwischen den Schmitzringen 4a, 5a ein Lichtspalt entsteht. Dann kann die Kraft F hydr. abgelesen werden.
Nach Abstellen des Öldruckes werden die Schmitzringe 4a, 5a
auseinandergefahren. Gegebenenfalls wird die Vorspannungseinstellung korrigiert und der Meßvorgang wiederholt.

Die Anwendung dieser Vorrichtung ist so einfach, daß sie
jedem Betriebsmechaniker in die Hand gegeben werden darf.

Im speziellen Fall wird sinnvollerweise das Teil mit dem
Zulaufkanal 14 einem Gummizylinder und das andere einem
Plattenzylinder zugeordnet. Wenn zwischen Gummizylindern
gemessen werden soll kann das Oberteil 2 mit einer Zwischenlage verwendet werden. Es ist selbstverständlich
möglich, anstelle der Zwischenlage ein den Gummizylindern
angepaßtes Oberteil 2 zu verwenden.

Die Genauigkeit der Vorspannungseinstellung erhöht sich
wesentlich, wenn neben beiden Schmitzringpaaren gleichzeitig eine gleichgroße Kraft aufgebracht wird, da hierbei
bezüglich der Zylindermitte echt symmetrische Bedingungen
vorliegen. Es wäre deshalb sehr vorteilhaft, mit zwei
parallel an die gleiche Druckquelle angeschlossene Kraftgeber zu arbeiten.

Forschungsgesellschaft Druckmaschinen e.V.
Lyoner Str. 18, 6000 Frankfurt / Main

Verfahren und Vorrichtung zur Messung der Schmitzringvorspannung an Druckmaschinen

Patentansprüche

1.) Verfahren zur Messung der Vorspannung zwischen zwei
miteinander in Arbeitskontakt stehenden Schmitzringen
an Rotationsdruckmaschinenzylindern,
d a d u r c h   g e k e n n z e i c h n e t,
daß die Druckwerkszylinder in Position "Druck ab" gestellt werden, daß in den damit gebildeten Spalt zwischen den Druckwerkszylindern die Teile einer mindestens
zweigeteilten Druckkammer nebeneinander eingeschoben
und im Spalt zusammengefügt werden,
daß die Druckwerkszylinder in Position "Druck an" gestellt werden, daß die Druckkammer an ein Druckmedium
angeschlossen wird und der im Moment des voneinander
Abhebens der in Kontakt stehenden Schmitzringe (Lichtspalt) vorhandene Druck mittels eines Meßgerätes gemessen und der Ermittlung der Schmitzringvorspannung
zugrunde gelegt wird.

- 2 -

2.) Vorrichtung zur Messung der Vorspannung zwischen zwei
miteinander in Arbeitskontakt stehenden Schmitzringen
an Rotationsdruckmaschinenzylindern nach dem Verfahren
gemäß Anspruch 1,
d a d u r c h   g e k e n n z e i c h n e t ,
daß die Vorrichtung aus zwei zusammenfügbaren Teilen
(1, 2) gebildet ist, deren anliegende Flächen (6, 7)
eine abgeschlossene Druckkammer (8) bilden, die durch
Dichtmittel (12) nach außen abgedichtet und durch einen
Zulaufkanal (14) mit einem unter Druck stehenden Medium
(Druckquelle) verbunden ist, daß die Außenflächen (9, 10)
der Teile (1, 2) der jeweiligen Außenkontur der Druckmaschinenzylinder (4, 5) so angepaßt sind, daß die Teile
(1, 2) nebeneinander bei abgestellten Druckmaschinenzylindern (4, 5) in den Spalt (3) zwischen den Druckmaschinenzylindern (4, 5) und in dem Bereich neben den Schmitzringen (4a, 5a) einbringbar sind, daß die Druckkammer (8)
durch ein Druckmedium derart unter Druck versetzbar ist,
daß die Schmitzringe (4a, 5a) sich voneinander lösen und
einen Lichtspalt bilden und daß eine Meßvorrichtung (18)
zur Anzeige des beim Lösen der Schmitzringe vorhandenen
Druckes in der Druckkammer (8) und damit der Schmitzringvorspannung vorgesehen ist.

3.) Vorrichtung nach Anspruch 2,
d a d u r c h   g e k e n n z e i c h n e t ,
daß die Dichtmittel aus einem in einer Nut (11) an einem
Teil (1) der Vorrichtung ringförmig angeordneten Dichtring (12) bestehen, über den eine außerhalb der Druckkammer (8) an einem Teil (1) der Vorrichtung festgeklebte Membran (17) ausgebreitet ist.

4.) Vorrichtung nach Anspruch 2 oder 3,
   d a d u r c h   g e k e n n z e i c h n e t,
   daß im ringförmigen Bereich zwischen dem Dichtring (12)
   und der Klebefläche für die Membran (17) eine ringförmige Ausnehmung (15) in der Oberfläche des Teils (1)
   vorgesehen ist, die mit einer Entlüftungsbohrung (16)
   in Verbindung steht.

Fig.1

Fig.2

Fig.3

1/3

0056643

Fig.4

0056643

Fig.5

**Europäisches Patentamt**

**EUROPÄISCHER RECHERCHENBERICHT**

·EP 82 10 0313

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| P,X | EP - A - 0 023 541 (MAN ROLAND)<br><br>* Seite 1, Zeile 20 bis Seite 2, Zeile 10; Seite 3, Zeile 31 bis Seite 5, Zeile 9; Ansprüche 1 und 3; Figur *<br><br>-- | 1,2 |
| A,D | DE - A - 2 528 027 (MAN AG)<br><br>* Seite 1, Zeile 1 bis Seite 2, Zeile 14 *<br><br>-- | 1 |
| A | DE - A - 2 614 792 (MAN AG)<br><br>* Seite 13, Zeile 18 bis Seite 14, letzte Zeile; Figur 2 *<br><br>-- | 1 |
| A | US - A - 2 212 820 (BARBER)<br><br>* Seite 1, Zeile 57 bis Seite 2, Zeile 19 *<br><br>-- | 1 |
| A | DE - A - 2 830 059 (BROSA)<br><br>* das ganze Dokument *<br><br>-- | 2,3 |
| A | DE - C - 440 258 (LOSENHAUSEN-WERK)<br><br>* Figur 3 *<br><br>-- | 2 |
| A | DE - A - 2 910 391 (SKF)<br><br>------ | |

**KLASSIFIKATION DER ANMELDUNG (Int Cl³)**

B 41 F 33/00
            13/20
G 01 L  1/08

**RECHERCHIERTE SACHGEBIETE (Int. Cl.³)**

B 41 F
G 01 L

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 31-03-1982 | LUTZ |

EPA form 1503.1  06.78